# EUROPEAN PATENT SPECIFICATION

(11) **EP 4 544 089 B1**
(45) Date of publication and mention of the grant of the patent: **22.07.2026**
(21) Application number: 23723625.2
(22) Date of filing: 25.04.2023
(51) Int. Cl.: B29B 17/02, C22B 7/00, C22B 11/00, H01M 8/008

(54) **RECYCLING OF CATALYST COATED MEMBRANE COMPONENTS**
RECYCLING VON KATALYSATORBESCHICHTETEN MEMBRANKOMPONENTEN
RECYCLAGE DE COMPOSANTS DE MEMBRANE REVÊTUS DE CATALYSEUR

(30) Priority: 22.06.2022 GB 202209137
(43) Date of publication of application: 30.04.2025
(73) Proprietor: Johnson Matthey Public Limited Company, London EC2V 7AD (GB)
(72) Inventor: BASRA, Shireen, Kaur, Royston, SG8 5HE (GB); MCCREE-GREY, Jonathan, Royston, SG8 5HE (GB); TURNER JONES, Michael, Royston, SG8 5HE (GB); MISTRY, Krishna, Royston, SG8 5HE (GB); SPELLER, Stephen, Royston, SG8 5HE (GB)
(74) Representative: Johnson Matthey Public Limited Company
(86) International application number: PCT/GB2023/051094
(87) International publication number: WO 2023/247913

(56) References cited:
- WO-A1-2014/091456
- WO-A1-2021/083758
- WO-A2-2009/149241
- CN-A- 110 643 817
- KR-B1- 101 722 283
- US-A1- 2005 211 630
- US-A1- 2008 064 771
- US-A1- 2018 108 932
- US-A1- 2021 310 098
- VALENTE ANTONIO ET AL: "End of life of fuel cells and hydrogen products: From technologies to strategies", INTERNATIONAL JOURNAL OF HYDROGEN ENERGY, ELSEVIER, AMSTERDAM, NL, vol. 44, no. 38, 2 February 2019 (2019-02-02), pages 20965 - 20977, XP085797754, ISSN: 0360-3199, [retrieved on 20190202], DOI: 10.1016/J.IJHYDENE.2019.01.110

## Description

### Field

This specification relates to recycling methods for components of catalyst coated membranes such as those used in fuel cells and hydrogen producing water electrolysers.

### Background

Fuel cell and hydrogen producing water electrolyser production is set for rapid growth as investment is placed into the global hydrogen economy. Catalyst coated membranes (CCMs) are a major functional component of both fuel cells and electrolysers. Such CCMs generally comprise a conductive polymer membrane coated on either side by a catalyst containing layer. The CCMs are configured to drive oxidation and reduction reactions and support proton and electron transport, these processes been required for the fuel cell and electrolyser technologies to function.

While variations in CCM component materials and configurations exist according to functional performance requirements in end use applications, they generally contain several components of value including one or more platinum group metal (PGM) catalysts and one or more proton conducting polymers.

Typically, the membrane is formed of one or more ionomers such as perfluorosulfonic-acid (PFSA) ionomers. Ionomer may also be provided in one or both of the catalyst layers. The ionomer in the catalyst layers may be the same or different to the ionomer in the main membrane component and/or in other catalyst layer(s).

A CCM may comprise two different catalysts, one for driving an oxidation reaction on one side of the CCM and one for driving a reduction reaction on the other side of the CCM. A CCM may also comprise a recombination catalyst which is provided to catalyse the recombination of hydrogen and oxygen to form water, reducing the quantity of hydrogen crossing the membrane and mixing with oxygen to form a potentially explosive mixture. A CCM may also include a metal oxide (e.g., CeO₂) as a peroxide scavenger.

CCM catalysts can be based on platinum group metals such as platinum, ruthenium, iridium, palladium, or mixtures thereof. The platinum group metals may be provided in elemental (metallic) form, in compound form (e.g., an oxide, such as an iridium oxide catalyst), or as a PGM-base metal alloy (e.g., PtCo). Furthermore, the PGM catalyst materials may be supported on a substrate material (e.g., carbon, such as a platinum-on-carbon catalyst comprising particles of carbon on which platinum is disposed or PtCo-on-carbon).

Catalyst coated membranes (CCMs) can also be provided in combination with additional functional layers to form multi-layer membrane electrode assemblies (MEAs). Such MEAs may have 3, 5, or 7 layers for example.

With the increase in CCM manufacture for fuel cells and electrolysers, there is an associated increase in CCM waste materials, including a significant volume of scrap material created during CCM manufacture (e.g., due to failure at quality control) and also an increase in end-of-life (EoL) CCMs. Since CCMs contain several components which are rare and/or valuable, including platinum group metals (notably Pt, Pd, Ir and Ru) and ionomer (both in the membrane and catalyst layers), there is a growing demand for methods of recycling such components from waste CCM materials.

One current method to recover PGMs from production scrap and end-of-life CCM material involves incineration. The incineration process yields a PGM rich (typically Pt and Ir) ash which is processed via conventional PGM refining routes. However, the incineration process releases harmful and toxic gases such as CO₂ and HF from the polymers that are part of the membrane. Both these gases have negative impacts as they pollute the atmosphere, increase the greenhouse effect, and/or have harmful effects in the human body. As such, there is a need for a cleaner process which reduces or eliminates the emission of these gases.

In addition to the above, the incineration method destroys the ionomer component which also has significant value. As such, it would also be desirable to provide a process which is capable of recovering both PGM and ionomer components as well as providing a process which is cleaner, safer, and more environmentally friendly. Processes for recovering perfluorosulphonic acid ionomer are known. See, for example, WO2016/156815 and US7255798. Furthermore, processes for recovering individual PGM catalyst components are known. See, for example, US7709135. US 2008/064771 A1 discloses a process for recycling fuel cell components, from fuel cell components, for example from PEM fuel cell stacks, DMFC fuel cells, catalyst-coated membranes (CCMs), electrodes or membrane-electrode units (MEUs). WO 2009/149241 A2 discloses a method for recovering catalytic elements from fuel cell membrane electrode assemblies comprising oxidative acid leaching for extracting platinum or ruthenium. WO 2021/083758 A1 discloses methods for extracting iridium via a reductive acid leach. However, to enable
fuel cells and electrolysers to become more sustainable technologies, there is a need for commercially viable and environmentally friendly routes to recover, separate, and recycle both the PGMs and the ionomer components from waste CCM materials including production scrap and end-of-life material. It is an aim of the present specification to address this problem.

### Summary of Invention

The invention takes place as described in claims 1 to 18.

The acid used in one or both of the iridium leach and the leach of platinum, palladium and/or ruthenium is optionally hydrochloric acid and optionally does not contain nitric acid. Furthermore, one or both of the solution used for the leach of platinum, palladium and/or ruthenium and the solution used for the leach of iridium are preferably heated to a temperature of: at least 50°C, 60°C, or 70°C; no more than 160°C, 100°C, or 90°C; or within a range defined by any combination of the aforementioned lower and upper limits, wherein if the solution is heated above 100°C then this is done in a pressurized vessel. Example ranges include 50 to 100°C or 70 to 90°C. Solutions are heated to increase leaching rate of PGMs.

The oxidant can comprise, for example, a chlorate salt such as sodium chlorate solution or chlorine gas. According to one preferred option, the acid used in the leach of platinum, palladium and/or ruthenium is hydrochloric acid and the oxidant is chlorine gas generated from the hydrochloric acid electrolytically in-situ. The oxidant can be added to the hydrochloric acid solution or generated in-situ after heating up to the aforementioned temperature. Alternatively, the oxidant can be added in a plurality of aliquots during heating. For example, oxidant can be added in a series of aliquots during heating to a total concentration in a range 0.01 to 0.10 mol/l. The solution for the leach of platinum, palladium and/or ruthenium may have an acid concentration of: no less than 4 M, 5 M, or 5.5 M; no more than 7 M, 6.5 M, or 6 M; or within a range defined by any combination of the aforementioned lower and upper limits.

Separation of the solution containing the leached platinum, palladium and/or ruthenium may be achieved via filtration or centrifugation. The separated solution may be concentrated by boiling the solution down to a suitable platinum concentration for further processing. Alternatively, the leachate can be recirculated to leach platinum, palladium and/or ruthenium from further waste catalyst coated membrane material, recirculation being repeated as required until a suitable or target concentration of platinum is reached. The platinum, palladium and/or ruthenium containing leachate is then further processed to extract the platinum, palladium and/or ruthenium from the acidic solution using known techniques. The remaining solid components of the waste catalyst coated membrane material can be processed separately.

One advantage of the aforementioned process is that it achieves a high yield of recovery for platinum, palladium and/or ruthenium. For example, at least 80 wt%, 85 wt%, 90 wt%, or 95wt% of the platinum in waste catalyst coated membrane can be recovered.

Another advantage of the aforementioned process is that substantially no fluorine is leached out from the fluoropolymer membrane into the leachate using these conditions. This is advantageous for two reasons. First, the ionomer remains intact and can be recycled separately. Secondly, leaching of fluorine into the acidic leachate can lead to the formation of HF which can result in a serious environmental health and safety risk as well as damaging downstream processing equipment. As such, avoiding HF formation provides a safer and more environmentally friendly process.

Yet another advantage of the aforementioned process is that for CCMs which comprise both a platinum, palladium and/or ruthenium catalyst and an iridium oxide catalyst, which is a useful combination of catalysts for the cathode and anode catalysts respectively of a hydrogen producing water electrolyser, the leach conditions are selective for platinum, palladium and/or ruthenium and do not leach iridium to any significant extent. As such, the process represents an efficient way to separate platinum, palladium and/or ruthenium from the other components of such a waste CCM while leaving remaining CCM components intact to be processed separately.

The iridium (which may be in the form of an iridium oxide, mixed iridium oxide, or supported iridium oxide) can be separately extracted either using a leaching solution or via dispersion of the ionomer and separation of the remaining solid iridium containing catalyst material, e.g., via filtration or centrifugation. If a leach is used then this differs from that used for leaching of platinum, palladium and/or ruthenium. In particular, a reducing agent (e.g. selected from one of hydrazine, NaBH₄, and ammonium oxalate) rather than an oxidizing agent is used for the iridium leach. Furthermore, the acid solution, e.g. a HCl solution, may also be more concentrated for the iridium leach when compared to the leach for platinum, palladium and/or ruthenium. For example, the acid used for the iridium leach may be: no less than 6M, 7M, or 8M; no more than 15M, 12M, or 10M; or within a range defined by any combination of the aforementioned lower and upper limits (e.g. in a range 8 M to 12 M).

The leaching step for platinum, palladium and/or ruthenium and the steps for extracting iridium and dispersing the ionomer material as described above can be integrated into a number of different process-flows for recycling the various components of waste CCM materials. These various process-flows are described further in the detailed description. A critical feature of all the process-flows is that they can achieve recovery of all PGM and ionomer components.

### Brief Description of the Drawings

For a better understanding of the present invention and to show how the same may be carried into effect, certain embodiments of the present invention will now be described by way of example only with reference to the accompanying drawings, in which:
Figure 1 shows a waste CCM recycling process comprising an iridium leach followed by a platinum leach;
Figure 2 shows a waste CCM recycling process comprising a platinum leach followed by an iridium leach;
Figure 3 shows a waste CCM recycling process in which a platinum leaching step is performed prior to an ionomer dispersion step;
Figure 4 shows a waste CCM recycling process in which an ionomer dispersion step is performed prior to a platinum leaching step (and/or prior to an iridium leaching step); and
Figure 5 shows a waste CCM recycling process which may follow the process flow of Figure 3 or 4, but wherein the catalyst layers are first separated from the bulk polymer membrane by mechanical means or chemical delamination prior to further processing of the catalyst layer material according to the process flow of Figure 3 or 4.

### Detailed Description

As described in the summary section, according to one aspect of the present specification there is provided a method of recycling a waste catalyst coated membrane material comprising an ionomer membrane, at least one catalyst comprising platinum, palladium and/or ruthenium, and at least one catalyst comprising iridium, the method comprising:
(a) treating the waste catalyst coated membrane material with a heated solution comprising an acid and an oxidant, wherein platinum, palladium and/or ruthenium is leached from the waste catalyst coated membrane material into the solution which is separated from remaining solid components of the waste catalyst coated membrane material;
(b) treating the waste catalyst coated membrane material with a solvent to disperse the ionomer membrane and recover a dispersion of ionomer, wherein the dispersion of the ionomer is performed before or after the leaching of the platinum, palladium and/or ruthenium; and
(c) treating the waste catalyst coated membrane material to extract iridium by one or both of:
   (i) separating the remaining solid iridium containing catalyst material from the dispersion of ionomer after the leaching of the platinum, palladium and/or ruthenium and the dispersion of the ionomer; and
   (ii) leaching the iridium from the waste catalyst coated membrane material using a heated solution comprising an acid and a reducing agent and separating the solution comprising the leached iridium from remaining solid components of the waste catalyst coated membrane material, wherein the iridium leaching is performed before or after the leaching of the platinum, palladium and/or ruthenium.

The method steps can be performed to recover Pt, Ir, and ionomer in any order. That is: Pt - Ir - lonomer; Ir - Pt - lonomer; Ionomer - Pt - Ir; Ionomer Ir - Pt; Pt - Ionomer - Ir; or Ir - Ionomer - Pt.

The following description will focus on an example which includes a platinum catalyst and an iridium-based catalyst (e.g. IrOx). However, the same approach can be used if the platinum catalyst is replaced with a palladium catalyst, a ruthenium catalyst, a mixed PGM catalyst comprising a combination of at least two of platinum, palladium, and ruthenium, or a catalyst comprising at least one PGM and at least one base metal (e.g. PtCo).

The acid used in one or both of the iridium leach and the platinum leach is optionally hydrochloric acid. Furthermore, one or both of the solutions used for the leach of platinum and iridium are preferably heated to a temperature of: at least 50°C, 60°C, or 70°C; no more than 160°C, 100°C, or 90°C; or within a range defined by any combination of the aforementioned lower and upper limits, wherein if the solution is heated above 100°C then this is done in a pressurized vessel. The oxidant for the leach of platinum can comprise, for example, a chlorate salt such as sodium chlorate solution or chlorine gas (e.g., generated electrolytically in-situ). The oxidant can be added to the hydrochloric acid solution after heating up to the aforementioned temperature. The solution may comprise concentrated HCl of, for example, approximately 6M HCl.

Separation of the solution containing the leached platinum may be achieved via filtration. The separated solution may be concentrated by boiling the solution down to a suitable PGM concentration for further processing. Alternatively, the leachate can be recirculated to leach platinum from further waste catalyst coated membrane material, recirculation being repeated as required until a target concentration of PGM is reached. The PGM containing leachate is then further processed to extract the platinum from the acidic solution using known techniques. The remaining solid components of the waste catalyst coated membrane material can be processed separately.

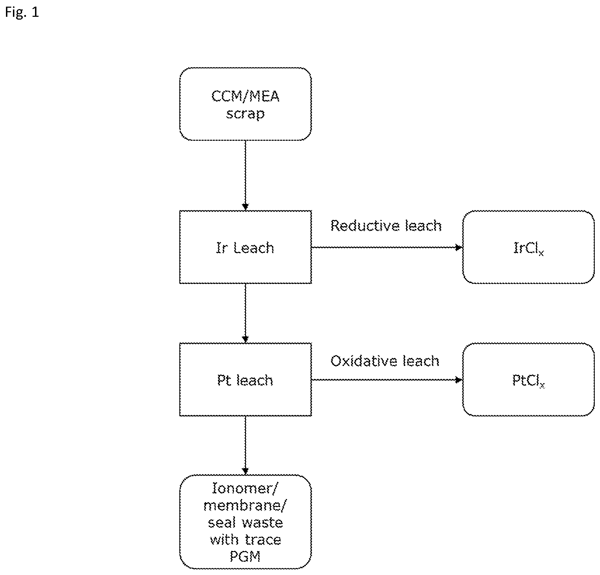

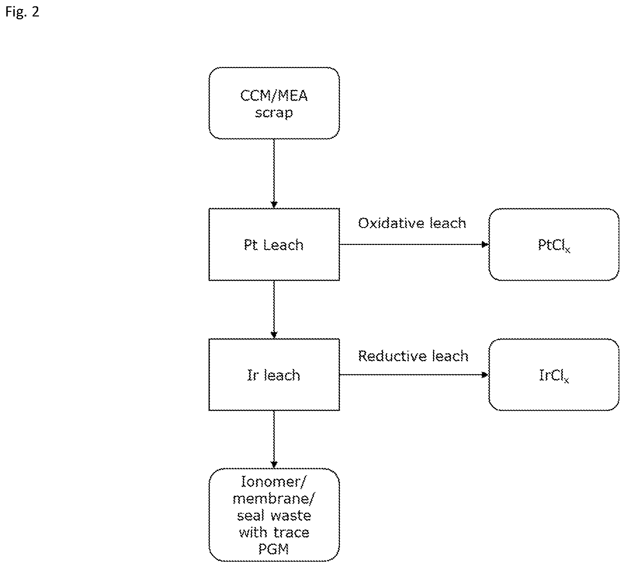

The method further comprises a step to extract iridium from the waste catalyst coated membrane. This may be achieved by leaching of Ir species from the waste catalyst coated membrane via a reductive dissolve process using an acid (such as 8 to 12 M HCl) and a reductant (such as hydrazine, NaBH₄, or ammonium oxalate), yielding an Ir-containing acidic liquor. WO2021083758 describes several examples of such a process for the dissolution of Ir in a reductive HCl environment. Since the previously described oxidative acidic platinum leach does not leach iridium to any significant extent, then such a reductive acidic leaching process step for the iridium can be performed after the oxidative acidic leaching step for platinum. However, it is also envisaged that the iridium leach can be performed prior to the platinum leach. The proposed route according to this example is thus a two-step process as illustrated in Figures 1 and 2 involving the selective leaching of Ir and Pt species from the waste CCM, without the need for incineration or other otherwise destructive processing. The steps are as follows and could be conducted in any order:
1. Leaching of Ir species via a reductive dissolve process using an acid (such as HCl) and a reductant (such as hydrazine), yielding an Ir-containing acidic liquor, and CCM/undissolved PGM residue.
2. Leaching of Pt species via an oxidative dissolve process using an acid (such as HCl) and an oxidant (such as a chlorate or Cl₂), yielding a Pt-containing acidic liquor, and CCM/undissolved PGM residue.

Liquors generated from steps one and two can then be directed to their respective purification processes (if significant impurities exist) or used directly as a precursor for new catalyst materials. The CCM residues may then undergo further leaching to remove the remaining PGM species, with the resulting ionomer residue then recycled.

This process selectively recovers PGMs directly from waste CCMs. The treated CCMs are also left largely unchanged, allowing for further simple recovery processes for the remaining components of the waste CCM (e.g., ionomer). As such, the process provides a full recovery and recycle route for both the PGMs and ionomer. The two-step process involving Pt and Ir leaches enables a simple and quick route to separate and recover both Ir and Pt with the possibility to directly feeding metal solutions back into catalyst manufacturing processes. With an estimated demand of approximately 800 kOzt Pt and 160 kOzt Ir for fuel cell and electrolyser CCMs by 2040, the compact, bespoke nature of the process will reduce lead-time and increase metal liquidity. The process enables the creation of a closed loop cycle for scrap CCM material, not only the PGMs but also the ionomer. The process also enables open loop recycling of end-of-life CCMs.

As an alternative to leaching iridium from the solid ionomer material as described above, the iridium (or iridium oxide) material can be separated from the ionomer by dispersing the ionomer. In this case, platinum can be leached from the waste CCM as previously described and then the remaining waste CCM comprising solid ionomer and iridium species can be subjected to an ionomer dispersion yielding a slurry comprising an ionomer dispersion in which solid iridium species are disposed. The ionomer dispersion can be separated from the solid iridium species using a solid/liquid separation (e.g., filtration or centrifugation) to yield an ionomer dispersion for recycling. The remaining solid iridium material may be directly re-used in a CCM manufacturing process or may be refined prior to re-use. Alternatively, the ionomer can be dispersed prior to platinum leaching to yield a mixed PGM residue for further processing.

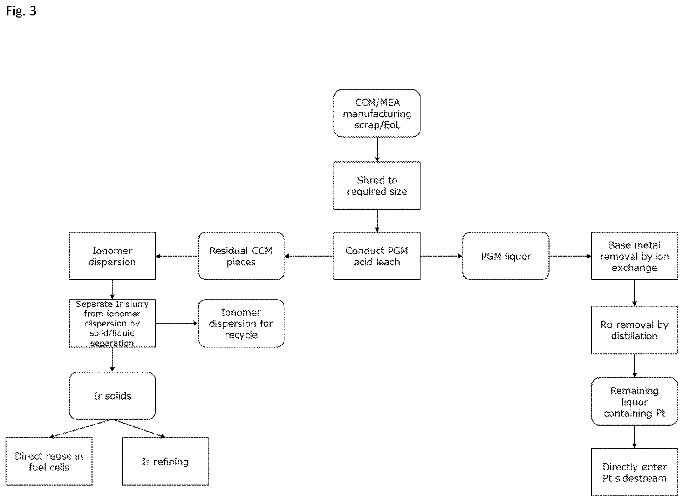

Such a process is illustrated in Figure 3. The CCM material may first need to be shredded into the required size for the process. The CCM material can then be subjected to HCl/oxidant (e.g. chlorine) treatment to leach platinum, and optionally also ruthenium if present in the CCM. The liquor from this treatment can then treated to remove base metals such as nickel and cobalt (using, for example, a cationic exchange resin), undergo Ru removal via a distillation or other process, and then enter directly into a Pt refining process stream to recover the Pt. The residual CCM pieces from the leach can undergo a process involving heating/autoclaving the material in a solvent (e.g., an alcoholic solvent) to disperse the ionomer. The ionomer dispersion can then be separated from the Ir containing solids via filtration or centrifugation. The ionomer dispersion can then go on for further processing to be recycled back to manufacture new CCMs either as a pure or blended material. Examples of processes for recycling perfluorosulphonic acid ionomer are described in US7255798 and WO2016/156815. The Ir catalyst, due to its inherent stability, could be reused without further processing or the Ir solids can be refined to recover the Ir metal.

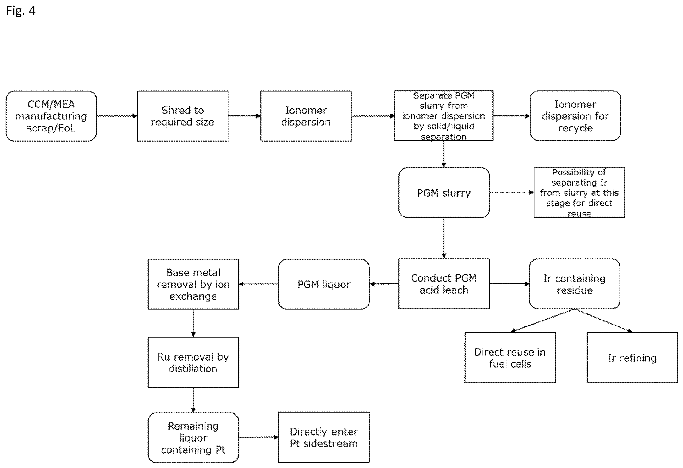

In the aforementioned process, the platinum leaching step is performed prior to the step of dispersing the ionomer. However, in an alternative method the ionomer dispersion is performed prior to the platinum leaching step. Such an alternative method is illustrated in Figure 4. As before, the waste CCMs can first be shredded to the required size. The CCM scrap pieces can then heated in a solvent (e.g., an alcoholic solvent) to elevated temperature and optionally autoclaved to disperse the CCM components. A solid/liquid separation is performed on the resultant slurry (e.g., by either filtration or centrifugation). The solution will contain dispersed ionomer which will then be further processed to be recycled back to manufacture new CCMs. The PGM residue may be dried to ensure complete removal of organic solvent before being subject to a HCl/chlorine leach treatment as previously described. The liquor from the leach can be treated to remove base metals such as Ni and/or Co (e.g., for example, a cationic exchange resin), undergo Ru removal (e.g., via a distillation process) and then the remaining platinum containing solution provided into a Pt refining process stream to recover the Pt as previously described. The residue from the leach process still contains the Ir catalyst which will have been largely unchanged due to its stability. This can either be processed in order to directly reuse the Ir catalyst material (e.g., IrOx) or the residue can be refined to recover the Ir.

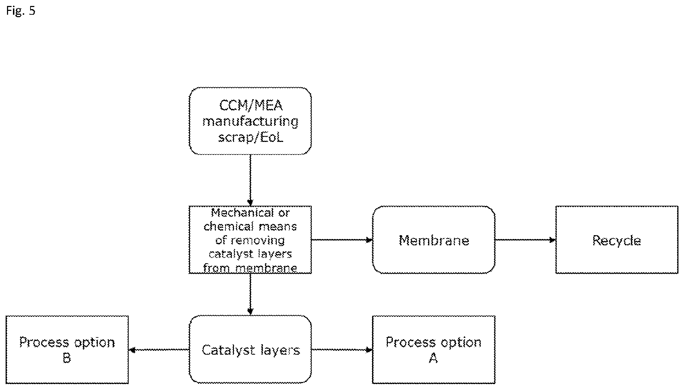

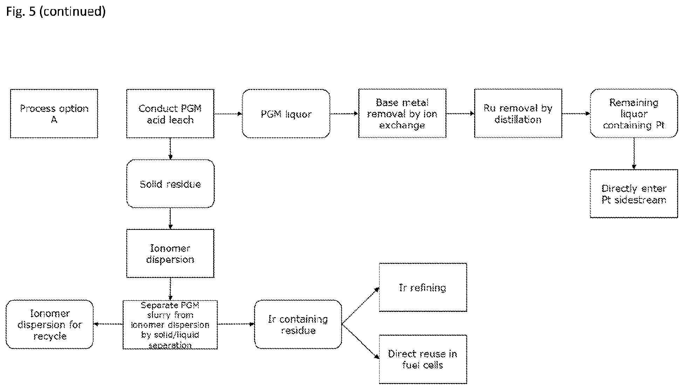

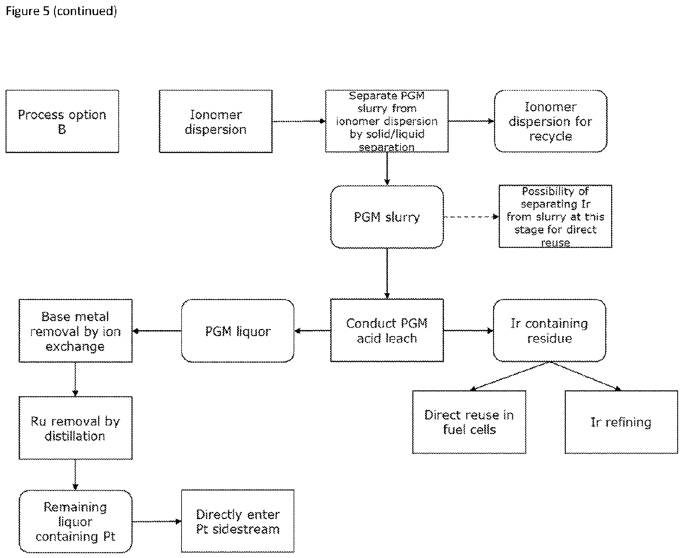

As was previously mentioned in the background section, CCMs may contain ionomer in one or both of the catalyst layers as well as in the membrane on which the catalyst layers are disposed. While the process flows as previous described can be applied to an intact membrane and catalyst layer structure, it is also envisaged that the catalyst layers can be separated from the membrane such that the membrane can be processed separated from the catalyst layers. Such a modified process flow is illustrated in Figure 5. The first stage of this modified process involves separating the catalyst layers from the ePTFE membrane, for example using mechanical means such as sonication or electrohydraulic fragmentation or via chemical delamination. The sonication method may involve the CCM material being immersed in an alcohol-water mixture and sonicated for a period of time where the catalyst layers separate and disperse into the solvent. The ePTFE pieces can be separated and the solvent removed from the catalyst layer material. Once the membrane and catalyst layers are separated cleanly, the ePTFE membrane can be further processed to recover the ionomer component. To recover the PGMs and ionomer in the catalysts layers there are two options as illustrated in Figure 5 and discussed below.

Process Option A: The catalyst layer material can be subjected to HCl/oxidant (e.g. chlorine) treatment to leach the platinum. The liquor from this treatment can then be purified from base metals (using, for example, a cationic exchange resin), undergo Ru removal via a distillation or other process, and then enter directly into a Pt refining stream. The remaining Ir containing residue from the leach can undergo a process which involves heating/autoclaving the material in an alcoholic solvent to dissolve/disperse the ionomer. The ionomer dispersion is separated from the Ir containing solution via filtration or centrifugation (as an alternative, the Ir can be leached prior to or after ionomer dispersion). The ionomer dispersion then goes on for further processing to be recycled back to manufacture new CCMs. The Ir containing residue can either be processed in order to directly reuse the Ir catalyst or the residue can be refined to recover the Ir metal. This process route is similar to that illustrated in Figure 3.

Process Option B: Alternatively, the catalyst layer material can be heated in alcoholic solvent to elevated temperature and optionally autoclaved to disperse the CCM components. This resultant slurry then undergoes a solid/liquid separation by either filtration or centrifugation. The supernatant/filtrate contains dispersed ionomer which can then be further processed to be recycled back to manufacture new CCMs. The PGM residue is dried to ensure complete removal of organic solvent before being subject to a HCl/chlorine leach treatment. The liquor from this leach treatment can then be purified from base metals (using, for example, a cationic exchange resin), undergo Ru removal via a distillation process, and then enter directly into a Pt refining stream. The residue from the leach process still contains the Ir catalyst which will have been largely unchanged due to its stability. This can either be processed in order to directly reuse the Ir catalyst or the residue can be refined to recover the Ir metal. This process route is similar to that illustrated in Figure 4.

Common features of all the above described CCM recycling processes are the use of an oxidative acid leach to extract platinum (and/or palladium and/or ruthenium) material with an ionomer dispersion and an extraction of iridium either via a reductive leach or solid-liquid separation after extraction of the platinum and ionomer dispersion. The Pt leach can be applied before or after dispersing ionomer and before or after leaching of iridium. In Figure 1, the process order is: (i) iridium leach; (ii) platinum leach; (iii) processing of remaining ionomer membrane. In Figure 2, the process order is: (i) platinum leach; (ii) iridium leach; (iii) processing of remaining ionomer membrane. In Figures 3, 4 and 5, an iridium leach is not required to separate the iridium from the ionomer. Rather, the iridium containing material is separated from the ionomer material by dispersing the ionomer material and using a solid/solution separation to remove the ionomer. The platinum leaching step can be performed prior to the step of dispersing the ionomer as in Figure 3. Alternatively, the ionomer dispersion step can be performed prior to the platinum leaching step as in Figure 4. Figure 5 shows both options in a process which first separates the catalyst layers from the bulk polymer membrane.

The specific method to be utilized will depend on operator requirements, demand for components, and desired form of material recovered by the process. For example, if it is desired to extract a certain component early in the recycling process, e.g., due to a shortage of that particular component, then the appropriate process flow may be selected to obtain the desired component early in the process rather than retaining a significant quantity of the component for extended time periods within the recycling process. For example, if it is desired to recover platinum quickly then the process of Figure 2 may be selected where a platinum leach is performed first. Alternatively, if it is desired to recover the bulk of the ionomer early in the process then the process of Figure 5 may be selected, as the initial step of removing the catalyst layers from the bulk ionomer membrane ensures that the bulk ionomer membrane can be recovered and processed quickly while the ionomer and PGMs in the catalyst layers are subjected to further processing to perform the various separation steps. Alternatively still, if it is desired to recover a particular form of material, such as iridium oxide catalyst material for re-use rather than an iridium containing leachate, then the appropriate process flow may be selected to obtain the desired form of material. For example, in the case of a desire to directly recover an iridium based/derived catalyst for re-use, then an iridium leaching process as in the process of Figures 1 and 2 may be avoided and one of the routes in Figures 3 to 5 may be used to directly recover the solid iridium-based catalyst material (e.g., IrOₓ).

Methods for recovering ionomers have been described in US7255798 and WO2016/156815 and such methods can be integrated into the process flows of the present specification as described above. As discussed in the background section, it is often the case that different ionomers may be used in one or both of the catalyst layers compared to the ionomer in the bulk membrane. Different ionomers can be selected to provide performance improvements in end applications. It is also possible to use blends of ionomers or have layers of different ionomers within the bulk polymer membrane. In such cases, the process flow of Figure 5 can be useful in separating the bulk polymer membrane from the catalyst layers at the start of the process flow. If different ionomers are used in the catalyst layers compared to the bulk membrane, then such a separation can be useful to separate the different ionomers prior to further processing.

### Examples

### CCM - HCl/Chlorate Leach - Single Use of Leach Solution

A method has been developed to leach PGMs from CCM production scrap. The recovered PGM material is subsequently refined using existing PGM refining processes. For such processes, there are stringent limits on the fluorine content (<1%) of the PGM material introduced into PGM refining processes. This was identified as a potential issue for leaching PGMs from waste CCM materials, as the CCMs are predominantly made from fluoropolymer. The present leaching process is such that PGMs can be leached without also introducing significant quantities of fluorine into the leach liquor.

A HCl/Chlorate solution was used to dissolve the Pt from the CCM. Ir is in the oxide form in the CCM and no significant quantity of the Ir is leached, enabling a separation of Pt and Ir. Chlorate was introduced in the form of a sodium chlorate solution added using a peristaltic pump.

A vessel was charged with 8.56 g of a fuel cell CCM (cut into approximately 2 cm x 3 cm pieces). 400 mL of 6M HCl (solution made from concentrated HCl and distilled H₂O) was charged to the flask and the stirring speed was set to 250 rpm. The reaction mixture was heated to 70°C. During heating a slight yellow colour to the solution could be seen.

4 mL of NaClO₃ solution (450g/L) was added at a rate of approximately 0.09 mL/min. After addition of NaClO₃ solution had finished, the reaction mixture was cooled to room temperature. The reaction mixture was filtered through 0.45 µm filter paper which gave a yellow solution (365 mL). The liquor was collected, and the residual CCM pieces were washed with distilled H₂O (86 mL). The CCM pieces were picked out and laid out to dry in air overnight on a watch glass.

In 8.56g of CCM, there was approximately 931 mg of Pt and 136 mg of Ir. IC/ICP analysis indicated that there are minimal traces of Ir in the leach liquor, indicating that the leach conditions do not leach the Ir to any significant extent. 926 mg of Pt was leached into the liquor and an additional 27 mg in the washings. In total approximately 953 mg of Pt was recovered. This does give a recovery of 102%. However, there is a +/- 10% error in the initial Pt loadings and also errors in the analysis, therefore the result is plausible. Analysis of the untreated CCMs indicated approximately 11 mg of Pt remaining. As such, the Pt recovery was 98 wt%. The liquor also showed undetectable amounts of fluoride, indicating the leach conditions are not destructive to the ionomer in the CCM.

### CCM - HCl/Chlorate Leach - Multiple Use of Leach Solution

This example uses a corresponding leaching process to that described in the previous example. However, in this case the liquor from the leach was reused multiple times with fresh batches of CCMs and addition of chlorate to show that the liquor can be concentrated up in this fashion. In this regard, it should be noted that a more concentrated Pt solution is advantageous for improving the efficiency of subsequent Pt refining steps.

For each leach cycle, the initial CCM weight, liquor volume before and after leaching, washing volumes, and residual CCM weight were measured.

The general method for each cycle was to load the CCM pieces (cut into 2 cm x 3 cm pieces) into the vessel with HCl/recycled liquor. Before cycle 3 and 5, the liquor was topped up with fresh 6M HCl (solution made from concentrated HCl and distilled H₂O). The mixture was stirred at 250 rpm and heated to 70°C. 3 mL of NaClO₃ solution (450 g/L) was added at a rate of about 0.09 mL/min. 45 mins after the addition started the reaction mixture was cooled to < 30°C. The reaction mixture was filtered through 0.45 µm cellulose filter paper to give a yellow liquor which deepened in colour over the cycles. The residual CCM pieces were washed with distilled H₂O and left to dry in air overnight before the weight was recorded. A summary of each leach cycle is provided below.

### Cycle 1:

CCM pieces before leach: 9.96 g
HCl/Liquor before leach: 400 mL (fresh 6M HCl)
Liquor after leach: 385 mL
Washings: 89 mL
Residual CCM pieces: 9.00 g

### Cycle 2:

CCM pieces before leach: 9.98 g
HCl/Liquor before leach: 375 mL
Liquor after leach: 365 mL
Washings: 88 mL
Residual CCM pieces: 9.06 g

### Cycle 3:

CCM pieces before leach: 10.00 g
HCl/Liquor before leach: 400 mL (355 mL topped up to 400 mL with fresh 6M HCl)
Liquor after leach: 390 mL
Washings: 115 mL
Residual CCM pieces: 9.06 g

### Cycle 4:

CCM pieces before leach: 9.98 g
HCl/Liquor before leach: 375 mL
Liquor after leach: 365 mL
Washings: 87 mL
Residual CCM pieces: 9.04 g

### Cycle 5:

CCM pieces before leach: 9.98 g
HCl/Liquor before leach: 460 mL (360 mL liquor topped up with fresh 6M HCl)
Liquor after leach: 445 mL
Washings:85 mL
Residual CCM pieces:9.04 g

### Cycle 6:

CCM pieces before leach: 9.98 g
HCl/Liquor before leach: 435 mL
Liquor after leach: 425 mL
Washings: 102 mL
Residual CCM pieces: 8.90 g

### Cycle 7:

CCM pieces before leach: 9.99g
HCl/Liquor before leach: 415 mL
Liquor after leach: 405 mL
Washings: 99 mL
Residual CCM pieces:8.97 g

### Cycle 8:

CCM pieces before leach: 10.00g
HCl/Liquor before leach: 395 mL
Liquor after leach: 385 mL
Washings:77 mL
Residual CCM pieces: 9.05 g

Between each cycle a sample of 10 mL liquor was taken for analysis, hence the reduction in liquor between cycles.

Results are indicated in the tables below. Although the wt% Pt recovered in the liquor dropped during multiple cycles from an initial 95 wt% value, it is noteworthy that even after eight cycles of re-using the same leach liquor, the Pt recovery was still 83 wt%.

| **Batch** | **CCM (g)** | **Total CCM (g)** | **Pt (mg)** | **Total pt (mg)** |
|---|---|---|---|---|
| **1** | 9.96 | 9.96 | 1084 | 1084 |
| **2** | 9.98 | 19.94 | 1086 | 2169 |
| **3** | 10.00 | 29.94 | 1088 | 3257 |
| **4** | 9.98 | 39.92 | 1086 | 4343 |
| **5** | 9.98 | 49.90 | 1086 | 5429 |
| **6** | 9.98 | 59.88 | 1086 | 6515 |
| **7** | 9.99 | 69.87 | 1087 | 7602 |
| **8** | 10.00 | 79.87 | 1088 | 8690 |

| **Batch** | **Liquor assay (mg/L)** | **Liquor (mL)** | **Pt - liquor (mg)** | **Pt - per batch (mg)** |
|---|---|---|---|---|
| **1** | 2686 | 385 | 1034 | 1034 |
| **2** | 5570 | 365 | 2033 | 999 |
| **3** | 7433 | 390 | 2899 | 866 |
| **4** | 10166 | 370 | 3761 | 863 |
| **5** | 10511 | 445 | 4677 | 916 |
| **6** | 12022 | 425 | 5109 | 432 |
| **7** | 14313 | 405 | 5797 | 687 |
| **8** | 17393 | 385 | 6696 | 900 |

| **Batch** | **Washing assay (mg/L)** | **Washings (mL)** | **Pt - washings (mg)** |
|---|---|---|---|
| **1** | 393 | 89 | 35 |
| **2** | 780 | 88 | 69 |
| **3** | 899 | 115 | 103 |
| **4** | 1329 | 87 | 116 |
| **5** | 1625 | 85 | 138 |
| **6** | 1536 | 102 | 157 |
| **7** | 2043 | 99 | 202 |
| **8** | 2657 | 77 | 205 |

| **Batch** | **Total recovered (mg)** | **per batch** | **Unrecovered (mg)** |
|---|---|---|---|
| **1** | 1069 | 1069 | 15 |
| **2** | 2102 | 1033 | 53 |
| **3** | 3002 | 901 | 187 |
| **4** | 3877 | 875 | 211 |
| **5** | 4816 | 938 | 147 |
| **6** | 5266 | 451 | 635 |
| **7** | 5999 | 733 | 354 |
| **8** | 6901 | 902 | 186 |

| **Batch** | **% Pt recovered in liquor** |
|---|---|
| **1** | 95% |
| **2** | 92% |
| **3** | 80% |
| **4** | 79% |
| **5** | 84% |
| **6** | 40% |
| **7** | 63% |
| **8** | 83% |

As such, it has been shown that this approach can be used to recovery of Pt from waste CCM material without damaging the ionomer material of the CCM or introducing fluorine into the Pt processing stream for subsequent Pt refining. It has also been shown that the Pt can be leached from waste CCM material without also leaching iridium, thus enabling Pt and Ir to be separated and recovered for re-use. As such, using this approach it is possible to recover the Pt, Ir, and ionomer components (and optionally ruthenium if present).

### Iridium Recovery

Iridium can be recovered using a reductive leaching process. For example, it has been demonstrated that iridium can be leached from IrOx catalyst material using a leach solution comprising hydrazine reducing agent and 8 to 12M HCl, refluxing for approximately 5 hours. It should be noted that the iridium leaching process is not as efficient as the previously described platinum leach. As such, repeated leaching cycles can be utilized to increase the recovery of iridium.

The reducing agent can be provided in the acidic leaching solution. Alternatively, the waste catalyst coated membrane material can be pre-treated with the reducing agent prior to being leached with the acidic leaching solution for extraction of iridium. In this approach, the CCM scrap, or PGM residue from a recycling process of CCMs, is subjected to treatment with a reducing agent (such as hydrazine, sodium borohydride, ammonium oxalate, etc.) in water as a solvent. This reduces the Ir catalyst to a lower oxidation state which is then subjected to highly concentrate HCl (e.g. 12 M HCl) at elevated temperatures (e.g. 70 - 105°C for 5-6 hours) to yield an Ir solution. The mixture is cooled to room temperature and the residual CCM and fine particulates are filtered, washed with water and dried for further processing to recover the remaining components such as other PGM catalysts and ionomer.

To increase the recovery of Ir, the residue may be subjected to the reaction conditions described above in an iterative process. The resultant Ir liquor can then be assessed to determine if any separation methods are needed to isolate the Ir species via conventional refining methods and/or to isolate the Ir in the desired form (eg, Ir chloride salt, Ir metal).

The process leaves the CCM residue largely unchanged to allow for further processing to recover other components such as the ionomer and other catalysts for recycle.

The method described above can be carried out on pure IrOx material, PGM residue which has been formed from a recycle process of the CCMs aimed at recovering ionomer first, or alternative PGM residues which contain a mixture of IrOx with other PGM catalysts and impurities. This method can also be carried out in a sealed vessel (i.e. under pressure).

Additionally, or alternatively, remaining IrOx catalyst can be recovered after dispersing the ionomer via a liquid-solid extraction process. The two approaches (lr leaching and solid/liquid Ir-catalyst separation) can be combined to ensure substantially all of the iridium is recovered.

Various different process flows comprising this leaching approach can be utilized to recover the Pt, Ir, and ionomer components as described herein. While this invention has been particularly shown and described with reference to certain examples, it will be understood to those skilled in the art that various changes in form and detail may be made without departing from the scope of the invention as defined by the appended claims.

## Claims

1. A method of recycling a waste catalyst coated membrane material comprising an ionomer membrane, at least one catalyst comprising platinum, palladium and/or ruthenium, and at least one catalyst comprising iridium, the method comprising:
(a) treating the waste catalyst coated membrane material with a heated solution comprising an acid and an oxidant, wherein platinum, palladium and/or ruthenium is leached from the waste catalyst coated membrane material into the solution which is separated from remaining solid components of the waste catalyst coated membrane material;
(b) treating the waste catalyst coated membrane material with a solvent to disperse the ionomer membrane and recover a dispersion of ionomer, wherein the dispersion of the ionomer is performed before or after the leaching of the platinum, palladium and/or ruthenium; and
(c) treating the waste catalyst coated membrane material to extract iridium by one or both of:
(i) separating the remaining solid iridium containing catalyst material from the dispersion of ionomer after the leaching of the platinum, palladium and/or ruthenium and the dispersion of the ionomer; and
(ii) leaching the iridium from the waste catalyst coated membrane material using a heated solution comprising an acid and a reducing agent and separating the solution comprising the leached iridium from remaining solid components of the waste catalyst coated membrane material, wherein the iridium leaching is performed before or after the leaching of the platinum, palladium and/or ruthenium.

2. A method according to claim 1, wherein the acid used in one or both of the iridium leach and the leach of platinum, palladium and/or ruthenium is hydrochloric acid.

3. A method according to claim 1 or 2,
wherein one or both of the solution used for the leach of platinum, palladium and/or ruthenium and the solution used for the leach of iridium are heated to a temperature of: at least 50°C, 60°C, or 70°C; no more than 160°C, 100°C, or 90°C; or within a range defined by any combination of the aforementioned lower and upper limits, wherein if the solution is heated above 100°C then this is done in a pressurized vessel.

4. A method according to any preceding claim,
wherein the oxidant comprises a chlorate salt or chlorine gas.

5. A method according to any preceding claim,
wherein the acid used in the leach of platinum, palladium and/or ruthenium is hydrochloric acid and the oxidant is chlorine gas generated from the hydrochloric acid electrolytically in-situ.

6. A method according to any preceding claim,
wherein the oxidant is added to the acid solution or generated in the acid solution after heating the hydrochloric acid solution.

7. A method according to any one of claims 1 to 5,
wherein the oxidant is added to the acid solution or generated in a plurality of aliquots during heating.

8. A method according to any preceding claim,
wherein the oxidant is added to the acid solution or generated to a total concentration of oxidant within in a range 0.01 to 0.10 mol/l.

9. A method according to any preceding claim,
wherein the solution for leaching platinum, palladium and/or ruthenium has an acid concentration of: no less than 4 M, 5 M, or 5.5 M; no more than 7 M, 6.5 M, or 6 M; or within a range defined by any combination of the aforementioned lower and upper limits.

10. A method according to any preceding claim,
wherein after separating the solution containing the leached platinum, palladium and/or ruthenium from remaining solid components of the waste catalyst coated membrane material, the solution is concentrated by boiling the solution down.

11. A method according to any preceding claims,
wherein after separating the solution containing the leached platinum, palladium and/or ruthenium from remaining solid components of the waste catalyst coated membrane material, the solution is re-used to leach platinum, palladium and/or ruthenium from further waste catalyst coated membrane material.

12. A method according to any preceding claim,
wherein the platinum, palladium and/or ruthenium is leached from the waste catalyst coated membrane material prior to dispersing the ionomer.

13. A method according to any one of claims 1 to 11,
wherein the platinum, palladium and/or ruthenium is leached from the waste catalyst coated membrane material after dispersing the ionomer and separating the solvent containing the ionomer from remaining solid components of the waste catalyst coated membrane material.

14. A method according to any preceding claim,
wherein the waste catalyst coated membrane material comprises a membrane and two catalyst layers disposed on either side of the membrane, and wherein the waste catalyst coated membrane material is treated to remove the catalyst layers from the membrane prior to further processing of the catalyst layers according to the method of any preceding claim.

15. A method according to any preceding claim,
wherein the catalyst comprising iridium is an iridium oxide or mixed iridium oxide.

16. A method according to any preceding claim, wherein the reducing agent is selected from one of hydrazine, NaBH₄, and ammonium oxalate.

17. A method according to any preceding claim, wherein the iridium leaching solution has an acid concentration of: no less than 6 M, 7 M, or 8 M; no more than 15 M, 12 M, or 10 M; or within a range defined by any combination of the aforementioned lower and upper limits.

18. A method according to any preceding claim, wherein the reducing agent is provided in the acidic leaching solution for extraction iridium or wherein the waste catalyst coated membrane material is pre-treated with the reducing agent prior to being leached with the acidic leaching solution for extraction of iridium.

## Patentansprüche

1. Verfahren zum Recyceln eines katalysatorbeschichteten Abfallmembranmaterials, umfassend eine Ionomermembran, mindestens einen Katalysator, umfassend Platin, Palladium und/oder Ruthenium, und mindestens einen Katalysator, umfassend Iridium, das Verfahren umfassend:
(a) Behandeln des katalysatorbeschichteten Abfallmembranmaterials mit einer erhitzten Lösung, umfassend eine Säure und ein Oxidationsmittel, wobei Platin, Palladium und/oder Ruthenium aus dem katalysatorbeschichteten Abfallmembranmaterial in die Lösung ausgelaugt wird, die von verbleibenden festen Komponenten des katalysatorbeschichteten Abfallmembranmaterials abgeschieden ist;
(b) Behandeln des katalysatorbeschichteten Abfallmembranmaterials mit einem Lösungsmittel, um die Ionomermembran zu dispergieren und eine Dispersion eines lonomers zurückzugewinnen, wobei die Dispersion des Ionomers vor oder nach dem Auslaugen des Platins, Palladiums und/oder Rutheniums durchgeführt wird; und
(c) Behandeln des katalysatorbeschichteten Abfallmembranmaterials, um Iridium durch eines oder beides zu extrahieren von:
(i) Abscheiden des verbleibenden festen iridiumhaltigen Katalysatormaterials von der lonomerdispersion nach dem Auslaugen des Platins, Palladiums und/oder Rutheniums und dem Dispergieren des Ionomers; und
(ii) Auslaugen des Iridiums aus dem katalysatorbeschichteten Abfallmembranmaterial unter Verwendung einer erhitzten Lösung, umfassend eine Säure und Reduktionsmittel, und Abscheiden der Lösung, umfassend das ausgelaugte Iridium, von verbleibenden festen Komponenten des katalysatorbeschichteten Abfallmembranmaterials, wobei das Auslaugen des Iridiums vor oder nach dem Auslaugen des Platins, Palladiums und/oder Rutheniums durchgeführt wird.

2. Verfahren nach Anspruch 1, wobei die Säure, die bei einer oder beiden der Iridiumauslaugung und der Auslaugung von Platin, Palladium und/oder Ruthenium verwendet wird, Salzsäure ist.

3. Verfahren nach Anspruch 1 oder 2,
wobei eine oder beide von der Lösung, die für die Auslaugung von Platin, Palladium und/oder Ruthenium verwendet wird, und der Lösung, die für die Auslaugung von Iridium verwendet wird, auf eine Temperatur erhitzt werden von: mindestens 50 °C, 60 °C oder 70 °C; nicht mehr als 160 °C, 100 °C oder 90 °C; oder innerhalb eines Bereichs, der durch eine beliebige Kombination der vorgenannten Unter- und Obergrenzen definiert ist, wobei, falls die Lösung über 100 °C erhitzt wird, dies in einem Druckbehälter erfolgt.

4. Verfahren nach einem der vorstehenden Ansprüche,
wobei das Oxidationsmittel ein Chloratsalz oder Chlorgas umfasst.

5. Verfahren nach einem der vorstehenden Ansprüche,
wobei die Säure, die bei der Auslaugung von Platin, Palladium und/oder Ruthenium verwendet wird, Salzsäure ist und das Oxidationsmittel Chlorgas ist, das elektrolytisch in situ aus der Salzsäure erzeugt wird.

6. Verfahren nach einem der vorstehenden Ansprüche,
wobei das Oxidationsmittel der Säurelösung zugegeben wird oder in der Säurelösung nach dem Erhitzen der Salzsäurelösung erzeugt wird.

7. Verfahren nach einem der Ansprüche 1 bis 5,
wobei das Oxidationsmittel der Säurelösung zugegeben wird oder während des Erhitzens in einer Vielzahl von Aliquoten erzeugt wird.

8. Verfahren nach einem der vorstehenden Ansprüche,
wobei das Oxidationsmittel der Säurelösung zugegeben oder bis zu einer Gesamtkonzentration an Oxidationsmittel in einem Bereich von 0,01 bis 0,10 mol/I erzeugt wird.

9. Verfahren nach einem der vorstehenden Ansprüche,
wobei die Lösung zum Auslaugen von Platin, Palladium und/oder Ruthenium eine Säurekonzentration aufweist von: nicht weniger als 4 M, 5 M oder 5,5 M; nicht mehr als 7 M, 6,5 GM oder 6 M; oder innerhalb eines Bereichs, der durch eine beliebige Kombination der oben genannten Unter- und Obergrenzen definiert ist.

10. Verfahren nach einem der vorstehenden Ansprüche,
wobei nach dem Abscheiden der Lösung, die das ausgelaugte Platin, Palladium und/oder Ruthenium enthält, von verbleibenden festen Komponenten des katalysatorbeschichteten Abfallmembranmaterials die Lösung durch Einkochen der Lösung konzentriert wird.

11. Verfahren nach einem der vorstehenden Ansprüche,
wobei nach dem Abscheiden der Lösung, die das ausgelaugte Platin, Palladium und/oder Ruthenium enthält, von verbleibenden festen Komponenten des katalysatorbeschichteten Abfallmembranmaterials die Lösung wiederverwendet wird, um Platin, Palladium und/oder Ruthenium aus weiterem katalysatorbeschichtetem Abfallmembranmaterial auszulaugen.

12. Verfahren nach einem der vorstehenden Ansprüche,
wobei das Platin, Palladium und/oder Ruthenium vor dem Dispergieren des lonomers aus dem katalysatorbeschichteten Abfallmembranmaterial herausgelöst wird.

13. Verfahren nach einem der Ansprüche 1 bis 11,
wobei das Platin, Palladium und/oder Ruthenium nach dem Dispergieren des lonomers und dem Abscheiden des Lösungsmittels, das das lonomer enthält, von verbleibenden festen Komponenten des Abfallmaterials der katalysatorbeschichteten Membran aus dem katalysatorbeschichteten Abfallmembranmaterial ausgelaugt wird.

14. Verfahren nach einem der vorstehenden Ansprüche,
wobei das katalysatorbeschichtete Membranabfallmaterial eine Membran und zwei Katalysatorschichten umfasst, die auf beiden Seiten der Membran angeordnet sind, und wobei das katalysatorbeschichtete Membranabfallmaterial behandelt wird, um die Katalysatorschichten von der Membran vor einem weiteren Verarbeiten der Katalysatorschichten gemäß dem Verfahren nach einem der vorstehenden Ansprüche zu entfernen.

15. Verfahren nach einem der vorstehenden Ansprüche,
wobei der Katalysator, umfassend Iridium, Iridiumoxid oder gemischtes Iridiumoxid ist.

16. Verfahren nach einem der vorstehenden Ansprüche, wobei das Reduktionsmittel aus einem von Hydrazin, NaBH₄ und Ammoniumoxalat ausgewählt ist.

17. Verfahren nach einem der vorstehenden Ansprüche, wobei die Iridiumauslaugungslösung eine Säurekonzentration von: nicht weniger als 6 M, 7 M oder 8 M aufweist; nicht mehr als 15 M, 12 M oder 10 M; oder innerhalb eines Bereichs, der durch eine beliebige Kombination der oben genannten Unter- und Obergrenzen definiert ist.

18. Verfahren nach einem der vorstehenden Ansprüche, wobei das Reduktionsmittel in der sauren Auslauglösung für die Extraktion von Iridium bereitgestellt wird oder wobei das mit Altkatalysator beschichtete Membranmaterial mit dem Reduktionsmittel vorbehandelt wird, bevor es mit der sauren Auslauglösung für die Extraktion von Iridium ausgelaugt wird.

## Revendications

1. Procédé de recyclage d'un matériau de membrane revêtu de catalyseur usagé comprenant une membrane ionomère, au moins un catalyseur comprenant du platine, du palladium et/ou du ruthénium, et au moins un catalyseur comprenant de l'iridium, le procédé comprenant :
(a) le traitement du matériau de membrane revêtu de catalyseur usagé avec une solution chauffée comprenant un acide et un oxydant, dans lequel le platine, le palladium et/ou le ruthénium sont lixiviés du matériau de membrane revêtu de catalyseur usagé dans la solution qui est séparée des composants solides restants du matériau de membrane revêtu de catalyseur usagé ;
(b) le traitement du matériau de membrane revêtu de catalyseur usagé avec un solvant pour disperser la membrane ionomère et récupérer une dispersion d'ionomère, dans lequel la dispersion de l'ionomère est mise en œuvre avant ou après la lixiviation du platine, du palladium et/ou du ruthénium ; et
(c) le traitement du matériau de membrane revêtu de catalyseur usagé pour extraire de l'iridium par l'une et/ou l'autre parmi :
(i) la séparation du matériau catalyseur contenant de l'iridium solide restant par rapport à la dispersion d'ionomère après la lixiviation du platine, du palladium et/ou du ruthénium et la dispersion de l'ionomère ; et
(ii) la lixiviation de l'iridium hors du matériau de membrane revêtu de catalyseur usagé à l'aide d'une solution chauffée comprenant un acide et un agent réducteur et la séparation de la solution comprenant l'iridium lixivié par rapport aux composants solides restants du matériau de membrane revêtu de catalyseur usagé, dans lequel la lixiviation d'iridium est mise en œuvre avant ou après la lixiviation du platine, du palladium et/ou du ruthénium.

2. Procédé selon la revendication 1, dans lequel l'acide utilisé dans l'une et/ou l'autre de la lixiviation d'iridium et de la lixiviation du platine, du palladium et/ou du ruthénium est de l'acide chlorhydrique.

3. Procédé selon la revendication 1 ou 2,
dans lequel l'une et/ou l'autre de la solution utilisée pour la lixiviation du platine, du palladium et/ou du ruthénium et de la solution utilisée pour la lixiviation d'iridium sont chauffées à une température de : au moins 50 °C, 60 °C ou 70 °C ; pas plus de 160 °C, 100 °C ou 90 °C ; ou au sein d'une plage définie par l'une quelconque combinaison des limites inférieures et supérieures susmentionnées, dans lequel si la solution est chauffée au-dessus de 100 °C alors ceci est fait dans un récipient sous pression.

4. Procédé selon l'une quelconque revendication précédente,
dans lequel l'oxydant comprend un sel chlorate ou du chlore gazeux.

5. Procédé selon l'une quelconque revendication précédente,
dans lequel l'acide utilisé dans la lixiviation du platine, du palladium et/ou du ruthénium est de l'acide chlorhydrique et l'oxydant est du chlore gazeux généré à partir de l'acide chlorhydrique par voie électrolytique in situ.

6. Procédé selon l'une quelconque revendication précédente,
dans lequel l'oxydant est ajouté à la solution d'acide ou généré dans la solution d'acide après chauffage de la solution d'acide chlorhydrique.

7. Procédé selon l'une quelconque des revendications 1 à 5,
dans lequel l'oxydant est ajouté à la solution d'acide ou généré dans une pluralité d'aliquotes pendant le chauffage.

8. Procédé selon l'une quelconque revendication précédente,
dans lequel l'oxydant est ajouté à la solution d'acide ou généré jusqu'à une concentration totale d'oxydant au sein d'une plage de 0,01 à 0,10 mol/I.

9. Procédé selon l'une quelconque revendication précédente,
dans lequel la solution destinée à la lixiviation de platine, de palladium et/ou de ruthénium a une concentration en acide de : pas moins de 4 M, 5 M ou 5,5 M ; pas plus de 7 M, 6,5 M ou 6 M ; ou au sein d'une plage définie par l'une quelconque combinaison des limites inférieures et supérieures susmentionnées.

10. Procédé selon l'une quelconque revendication précédente,
dans lequel après séparation de la solution contenant le platine, le palladium et/ou le ruthénium lixiviés par rapport aux composants solides restants du matériau de membrane revêtu de catalyseur usagé, la solution est concentrée en faisant bouillir la solution.

11. Procédé selon l'une quelconque des revendications précédentes,
dans lequel après séparation de la solution contenant le platine, le palladium et/ou le ruthénium lixiviés par rapport aux composants solides restants du matériau de membrane revêtu de catalyseur usagé, la solution est réutilisée pour lixivier du platine, du palladium et/ou du ruthénium d'un matériau de membrane revêtu de catalyseur usagé supplémentaire.

12. Procédé selon l'une quelconque revendication précédente,
dans lequel le platine, le palladium et/ou le ruthénium sont lixiviés du matériau de membrane revêtu de catalyseur usagé avant dispersion de l'ionomère.

13. Procédé selon l'une quelconque des revendications 1 à 11,
dans lequel le platine, le palladium et/ou le ruthénium sont lixiviés du matériau de membrane revêtu de catalyseur usagé après dispersion de l'ionomère et séparation du solvant contenant l'ionomère par rapport aux composants solides restants du matériau de membrane revêtu de catalyseur usagé.

14. Procédé selon l'une quelconque revendication précédente,
dans lequel le matériau de membrane revêtu de catalyseur usagé comprend une membrane et deux couches de catalyseur disposées de chaque côté de la membrane, et dans lequel le matériau de membrane revêtu de catalyseur usagé est traité pour retirer les couches de catalyseur de la membrane avant traitement ultérieur des couches de catalyseur conformément au procédé selon l'une quelconque revendication précédente.

15. Procédé selon l'une quelconque revendication précédente,
dans lequel le catalyseur comprenant de l'iridium est un oxyde d'iridium ou oxyde mixte d'iridium.

16. Procédé selon l'une quelconque revendication précédente, dans lequel l'agent réducteur est choisi parmi l'un parmi hydrazine, NaBH₄, et
oxalate d'ammonium.

17. Procédé selon l'une quelconque revendication précédente, dans lequel la solution de lixiviation d'iridium a une concentration en acide de : pas moins de 6 M, 7 M ou 8 M ; pas plus de 15 M, 12 M ou 10 M ; ou au sein d'une plage définie par l'une quelconque combinaison des limites inférieures et supérieures susmentionnées.

18. Procédé selon l'une quelconque revendication précédente, dans lequel l'agent réducteur est fourni dans la solution de lixiviation acide pour extraction d'iridium ou dans lequel le matériau de membrane revêtu de catalyseur usagé est prétraité avec l'agent réducteur avant d'être lixivié avec la solution de lixiviation acide pour extraction d'iridium.
